(19) 

Europäisches
Patentamt
European
Patent Office
Office européen
des brevets

(11) **EP 1 638 245 B2**

(12) **NOUVEAU FASCICULE DE BREVET EUROPEEN**
Après la procédure d'opposition

(45) Date de publication et mention de la
décision concernant l'opposition:
**06.03.2013 Bulletin 2013/10**

(45) Mention de la délivrance du brevet:
**11.11.2009 Bulletin 2009/46**

(21) Numéro de dépôt: **05108450.7**

(22) Date de dépôt: **14.09.2005**

(51) Int Cl.:
***H04L 9/06*** (2006.01)

(54) **Protection d'un algorithme DES**

Schutz eines DES-Algorithmus

Protection of a DES algorithm

(84) Etats contractants désignés:
**DE FR GB IT**

(30) Priorité: **15.09.2004 FR 0452063**

(43) Date de publication de la demande:
**22.03.2006 Bulletin 2006/12**

(73) Titulaire: **STMICROELECTRONICS S.A.**
**92120 Montrouge (FR)**

(72) Inventeurs:
• **Liardet, Pierre-Yvan**
**13790 Peynier (FR)**
• **Teglia, Yannick**
**13011 Marseille (FR)**

(74) Mandataire: **de Beaumont, Michel et al**
**1bis, rue Champollion**
**38000 Grenoble (FR)**

(56) Documents cités:
**EP-A- 1 109 350   EP-A- 1 263 163**

**Description**

<u>Domaine de l'invention</u>

La présente invention concerne le domaine des algorithmes de chiffrement, en particulier de type DES (Data Encryption Standard), exécutés par des circuits intégrés. L'invention concerne plus particulièrement la protection de l'exécution d'un algorithme DES contre une attaque par analyse statistique de la consommation (Differential Power Analysis - DPA) du circuit qui exécute l'algorithme.

<u>Exposé de l'art antérieur</u>

Les algorithmes DES ou tripleDES sont des algorithmes de chiffrement symétriques (à clé secrète) utilisés en cryptographie, par exemple, pour chiffrer des données avant de les faire transiter sur des supports non protégés (Internet, liaison entre une carte à puce et un lecteur de carte, entre un processeur et une mémoire externe, etc.). Ces algorithmes sont décrits, par exemple, dans des normes FIPS PUB 46-2 (DES) et FIPS PUB 46-1, et des modes de fonctionnement (connus sous les dénominations Electronic Codebook - ECB, Cipher Block Chaining - CBC, Cipher Feedback - CFB, Output Feedback - OFB) sont décrits dans FIPS PUB 81.
Ces algorithmes effectuent un chiffrement par blocs (de 64 bits) en utilisant des clés (de 64 bits pour le DES et de 128 bits pour le triple DES) desquelles sont dérivées des sous-clés de 48 bits. Le déchiffrement est effectué à partir de la même clé (algorithme symétrique). Dans la description qui suit on prendra pour exemple l'algorithme DES.
Un bloc à chiffrer noté M est soumis à une permutation initiale, notée IP, puis à seize itérations d'un calcul dépendant d'une clé, notée KEY, et enfin à une permutation inverse de la permutation initiale, notée $IP^{-1}$.
Le calcul dépendant de la clé KEY peut s'exprimer avec les notations suivantes :

i le rang de l'itération compris entre 1 et 16 ;
$L_iR_i$ un bloc de données de 64 bits, résultant de l'application de la fonction f à un bloc $R_{i-1}$ avec la sous-clé $K_i$, constitué d'un mot ou sous-bloc $L_i$ des 32 bits de gauche $b_1$ à $b_{32}$ et d'un mot ou sous-bloc $R_i$ des 32 bits de droite $b_{33}$ à $b_{64}$ ;
$K_i$ un bloc de 48 bits extrait de la clé KEY de 64 bits et utilisé dans la fonction de chiffrement de rang i ; et
f une fonction du chiffrement.

Avec les notations ci-dessus, le résultat de la permutation initiale IP est un bloc $L_0R_0$ et chaque itération applique :

$L_i = R_{i-1}$ ; et
$R_i = L_{i-1}$ (+) f ($R_{i-1}$, $K_i$) , où (+) désigne une addition bit-à-bit modulo 2 (OU-Exclusif bit-à-bit).

Le résultat de la dernière itération est un bloc $R_{16}L_{16}$ qui est soumis à la permutation inverse $IP^{-1}$ pour fournir un bloc chiffré noté M'.
La fonction f comporte trois étapes successives.
Une première étape est une expansion, notée E, des 32 bits du sous-bloc $R_{i-1}$ en 48 bits pour les combiner, par une fonction OU-Exclusif bit-à-bit (+), avec les 48 bits de la sous-clé $K_i$ de l'itération concernée. Le résultat de cette expansion et combinaison fournit huit groupes de six bits, notés $B_{1i}$ à $B_{8i}$, tels que :

$$B_{1i}B_{2i}B_{3i}B_{4i}B_{5i}B_{6i}B_{7i}B_{8i} = K_i (+) E(R_{i-1}).$$

Une deuxième étape applique aux 48 bits issus de l'étape précédente une table de substitution, notée S ou SBOX. Dans cette étape, chaque groupe de six bits issu de l'expansion précédente est transformé, par une de huit fonctions de substitution (fonctions primitives), notées $S_1$ à $S_8$, substituant chaque groupe $B_{1i}$ à $B_{8i}$ par un groupe $S_1$ ($B_{1i}$) à $S_8(B_{8i})$, chacun sur 4 bits, de sorte à obtenir huit groupes de quatre bits, soit de nouveau 32 bits. Le résultat peut être noté : $S_1$ ($B_{1i}$) $S_2(B_{2i})S_3$ ($B_{3i}$) ... $S_8$ ($B_{8i}$), les fonctions de substitution $S_1$ à $S_8$ étant indépendantes du rang de l'itération.
Une troisième étape est une permutation, notée P, des 32 bits issus de l'étape précédente. Cette permutation fournit un sous-bloc résultat de 32 bits correspondant au résultat de la fonction f et qui peut s'exprimer sous la forme :

$$f(R_{i-1}, K_i) = P(S_1(B_{1i})S_2(B_{2i})S_3(B_{3i})\ldots S_8(B_{8i})).$$

Chaque sous-clé $K_i$ est obtenue en appliquant une fonction de clé KS qui est une fonction particulière à la clé KEY, la fonction KS dépendant du rang i de l'itération, soit :

$$K_i = KS(i, KEY).$$

Les détails des fonctions primitives KS, $S_1$ à $S_8$ et P, ainsi que des fonctions E sont décrits dans les normes citées.

Le déchiffrement s'effectue en soumettant un bloc à déchiffrer M' à la permutation initiale IP, puis à 16 itérations de calcul identiques à celles du chiffrement à la seule différence que les sous-clés sont utilisées dans un ordre inverse (on part de la sous-clé $K_{16}$ pour terminer par la sous-clé $K_1$). Le premier bloc issu de la permutation inverse est le bloc $R_{16}L_{16}$ et le bloc issu de la dernière itération à soumettre à la permutation initiale inverse $IP^{-1}$ est le bloc $L_0R_0$. La permutation $IP^{-1}$ donne le bloc déchiffré M.

Une faiblesse des algorithmes de type DES apparaît lors d'attaques par analyse statistique de la consommation d'un circuit exécutant l'algorithme. De telles attaques consistent à faire des hypothèses sur la clé pour corréler un résultat intermédiaire durant les itérations à la consommation du circuit intégré. Ces attaques permettent de percer le secret constitué par la clé. En effet, la fonction f est connue (norme du DES) ainsi que la donnée d'entrée appliquée à l'algorithme. En supposant une partie de la sous-clé K par hypothèse, on obtient un résultat intermédiaire $L_iR_i$. Si on obtient une corrélation entre le résultat intermédiaire et la consommation du circuit à un instant t, l'hypothèse sur la clé est vérifiée. Les moyens de calcul informatiques permettent aux pirates d'effectuer des hypothèses en nombres suffisants, et ainsi de pirater le secret du circuit (la clé).

Une première solution connue pour tenter de protéger un secret manipulé par un algorithme DES est de masquer l'exécution par introduction de nombres aléatoires dans les itérations. Cette solution présente l'inconvénient de nécessiter une modification de l'algorithme lui-même et n'est donc pas applicable à des circuits dans lesquels la cellule d'exécution du DES existe déjà en logique câblée non reconfigurable. En effet, pour des questions de rapidité, l'algorithme est généralement exécuté, au moins partiellement, par une cellule en logique câblée intégrée au circuit utilisant les données. La clé est généralement stockée dans une zone sécurisée du circuit, par exemple, dans une phase de personnalisation des circuits intégrés. Son chargement dans la cellule d'exécution de l'algorithme s'effectue de façon protégée, par exemple en appliquant les méthodes décrites dans les brevets FR-A-2 802 668 et FR-A-2 802 669.

Une deuxième solution connue et décrite dans la demande EP 1263163 consiste à masquer l'exécution de l'algorithme avec la clé secrète en la faisant s'exécuter parmi plusieurs exécutions (de l'ordre d'une dizaine) utilisant de fausses clés. Ces clés sont stockées à demeure dans une mémoire non volatile associée au processeur d'exécution de l'algorithme ou directement câblées en dur dans le circuit. La vraie clé est généralement écrite lors de la personnalisation du circuit (par exemple, de la carte à puce) par une personne différente que le fabricant du circuit, dans une zone généralement inaccessible (zone sécurisée du circuit). Ainsi, un pirate ne peut pas savoir, lorsqu'une hypothèse sur une clé se vérifie, si c'est la bonne clé ou non qui a été utilisée. Un inconvénient de cette solution est que, pour préserver le masquage, il est nécessaire de protéger toutes les clés (les fausses comme la vraie) lors de leur chargement dans la cellule d'exécution de l'algorithme. Cela prend du temps et allonge, de façon incompatible avec la manipulation rapide souhaitée des données, l'exécution de l'algorithme. Un autre inconvénient de cette solution est qu'elle n'apporte que du bruit blanc donc aisément filtrable par le pirate.

Le document WO00/19367 décrit un procédé selon le préambule de la revendication 1.

Résumé de l'invention

La présente invention vise à améliorer la sécurité des algorithmes de chiffrement, en particulier de type DES, contre des attaques par analyses statistiques de la consommation d'un circuit intégré qui exécute cet algorithme.

L'invention vise notamment à proposer une solution compatible avec la rapidité recherchée pour les chiffrements et déchiffrements des données.

L'invention vise également à proposer une solution ne nécessitant pas de modifier l'algorithme lui-même et qui soit ainsi compatible avec des cellules d'exécution classique de l'algorithme DES.

Pour atteindre ces objets ainsi que d'autres, la présente invention prévoit un procédé de protection de l'exécution d'un calcul algorithmique prenant en compte au moins une donnée valide et au moins une clé secrète par un circuit intégré, et effectuant plusieurs itérations d'un calcul de chiffrement, consistant à exécuter l'algorithme avec la donnée valide entre plusieurs exécutions du même algorithme avec des données invalides correspondant à une combinaison de la donnée valide avec des masques prédéterminés.

Selon un mode de mise en oeuvre de la présente invention, la position de l'exécution avec la donnée valide parmi l'ensemble d'exécution est sélectionnée aléatoirement.

Selon un mode de mise en oeuvre de la présente invention, ladite combinaison est, pour chaque exécution masquée, une addition bit à bit des bits d'un bloc de la donnée valide avec les bits des masques.

Selon un mode de mise en oeuvre de la présente invention, l'exécution avec la donnée valide correspond à une combinaison avec un masque neutre pour l'opération de combinaison.

Selon un mode de mise en oeuvre de la présente invention, lesdits masques prédéterminés sont choisis de sorte que le résultat de l'application de l'algorithme avec la même clé soit différent pour au moins un bit du résultat de l'application de l'algorithme à la donnée valide.

Selon un mode de mise en oeuvre de la présente invention, l'algorithme est le DES, la combinaison intervenant avant l'exécution de la première itération.

Selon un mode de mise en oeuvre de la présente invention, les masques sont des blocs de 64 bits à combiner avec des blocs de 64 bits de la donnée valide avant application d'une itération de chiffrement, le bloc de 64 bits de chaque masque comprenant parmi les bits de positions $b_7$, $b_{57}$, $b_{49}$, $b_{41}$, $b_{33}$ et $b_{25}$, entre 1 et 6 bits à l'état 1, les bits de toutes les autres positions étant à l'état 0.

L'invention prévoit également un processeur d'exécution d'un algorithme de chiffrement de type DES ou analogue.

Description détaillée

Ces objets, caractéristiques et avantages, ainsi que d'autres de la présente invention seront exposés en détail dans la description suivante de modes de réalisation particuliers faite à titre non-limitatif. Pour des raisons de clarté, seuls les étapes et éléments qui sont nécessaires à la compréhension de l'invention seront décrits par la suite. En particulier, la réalisation d'un processeur de calcul pour la mise en oeuvre de l'invention n'a pas été détaillée, celle-ci pouvant être mise en oeuvre avec tout processeur classique, en lui fournissant les données adaptées.

Une caractéristique de la présente invention est de masquer l'exécution de l'algorithme de chiffrement en exécutant cet algorithme plusieurs fois avec de fausses données, masquant ainsi le chiffrement de la "vraie" donnée. La vraie donnée à chiffrer introduite dans la cellule de traitement de l'algorithme est combinée avec des masques, de préférence prédéterminés, de façon à créer de fausses données sur lesquelles est appliqué l'algorithme de chiffrement. L'exécution de l'algorithme avec la donnée introduite non masquée est intercalée, de préférence à une position aléatoire, dans la série d'exécutions masquées. De préférence, tous les chiffrements s'effectuent avec la même clé qui n'est donc transférée qu'une seule fois dans la cellule de traitement de l'algorithme.

Les masques sont en fait des blocs de donnés de même taille que les blocs de données traités par l'algorithme à l'étape choisie pour la combinaison qui sont combinés, de préférence, par une fonction de type OU-Exclusif (addition bit à bit) avec le bloc de données à chiffrer. De préférence, les masques sont choisis en fonction de l'algorithme pour que le résultat de l'application de l'algorithme avec la même clé soit différent pour au moins un bit du résultat de l'application de l'algorithme à la donnée valide.

Par conséquent, un pirate introduisant une donnée qu'il connaît et effectuant des hypothèses sur la clé est incapable d'obtenir une corrélation correcte avec la consommation du circuit intégré dans la mesure où cette consommation est fonction d'une donnée différente.

L'invention sera décrite par la suite en relation avec une mise en oeuvre préférée à l'algorithme DES. Elle s'applique toutefois plus généralement à tout algorithme de chiffrement, à la condition que la création des masques pour créer de fausses données par modification d'un message à chiffrer puisse être adaptée.

De préférence, les masques manipulés par l'algorithme qui servent à introduire de fausses corrélations sur le canal (masquer l'exécution) sont préenregistrés dans le circuit intégré contenant la cellule.

Un avantage qu'il y a à exécuter l'algorithme avec plusieurs données plutôt qu'avec plusieurs clés est que les données n'ont pas à être masquées pour leur introduction dans la cellule. La protection ne ralentit alors le chiffrement ou déchiffrement de la donnée introduite que de façon négligeable par rapport à la solution classique utilisant plusieurs clés.

La présente invention tire profit du fait que, dans tout algorithme de chiffrement et notamment dans l'algorithme DES, le déroulement du calcul fait que des valeurs successives peuvent être prédites en faisant des hypothèses sur la clé. Les faux messages (données masquées) intervenant dès le début font que ces hypothèses sont vues comme relatives à une fausse clé. Dans l'algorithme DES, à chaque moment du calcul où la clé intervient sous la forme d'une sous-clé avec le message, la donnée et la sous-clé sont alors liées par une fonction notée arbitrairement g pour fournir un résultat intermédiaire noté arbitrairement I qui est tel que I = g(KEY, D). Une attaque par analyse de la consommation consiste à chercher à corréler les résultats I à la consommation en effectuant des hypothèses sur la clé KEY. Connaissant la donnée D qu'il introduit, et connaissant la fonction g (l'algorithme DES est connu), le pirate calcule un résultat I à partir d'une hypothèse sur la clé KEY. Si la corrélation entre la valeur I et la consommation du circuit se vérifie, c'est que l'hypothèse sur la clé était la bonne.

Le fait d'exécuter l'algorithme sur une fausse donnée entraîne que le pirate obtient une corrélation sur une donnée modifiée D'. Il en découle que la corrélation apparaît sur une hypothèse de clé qui n'est pas la bonne. En d'autres termes, le pirate croit que l'algorithme exécute la fonction I = g(KEY,D) alors qu'il exécute en fin de compte I' = g(KEY, D'), avec D' = D(+)A, où A désigne le masque fournissant le résultat I'. Le pirate croit connaître la donnée (qu'il a introduite) et fait donc des hypothèses sur la clé à partir d'analyses de la consommation. Mais cette consommation est faussée sans qu'il le sache.

En fait, en combinant la donnée d'entrée avec un masque, l'invention masque indirectement la clé en tenant compte du fait que l'attaquant potentiel effectue des hypothèses sur cette clé.

Comme le résultat fourni par le circuit est faussé, il faut intercaler, de façon aléatoire, la "bonne" exécution parmi quelques exécutions masquées (le nombre d'exécutions masquées est choisi en fonction du temps disponible pour l'exécution de l'algorithme). Cela est notamment nécessaire pour faire fonctionner le circuit correctement en l'absence de piratage (il faut être en mesure de fournir le bon chiffrement lors d'une exécution normale). Ce résultat correct est fourni dans une zone de résultat différente de celle dans laquelle se retrouvent les fausses exécutions.

De préférence, l'exécution avec la donnée valide correspond en fait à une combinaison avec un masque neutre du point de vue de la combinaison. Ainsi, aucune différence n'est détectable entre les exécutions. La seule référence qui doit être mémorisée temporairement pour être capable d'identifier l'exécution avec la donnée valide est sa position dans l'ensemble des exécutions qui correspond, de préférence, au résultat d'un tirage aléatoire.

Dans le cadre de l'algorithme DES et selon ce mode de mise en oeuvre préféré, des masques ou données de masquage sont stockés, par exemple dans une zone de mémoire non volatile, dans le circuit intégré.

La fonction de construction des masques est fonction de l'algorithme et doit être telle que pour tout message D susceptible d'être choisi par l'attaquant et pour toute clé K (vraie) ou K' (fausse résultant d'une hypothèse), l'opération g (addition bit à bit dans le cas du DES) de combinaison de la première sous-clé $K_1$ ou $K_1'$ avec un résultat intermédiaire noté I ($I = E(R_0)$ dans le cas du DES) fonction de la donnée d'entrée avant application de la première sous-clé, est telle que :

$g(I, K_1') = g(I', K_1)$, où I' désigne le résultat intermédiaire obtenu avec la donnée masquée.

Les masques sont toutefois construits indépendamment des données D avec lesquelles ils sont susceptibles d'être combinés, ces données étant par contre inconnues.

Pour l'algorithme DES, lorsque l'on considère les bits du message initial, on voit que certaines positions de bits (déterminées par IP et E) sont combinées avec les bits de clés, par exemple, les bits 1, 2, 3, 4, 5 et 6 de la sous-clé $K_1$ sont combinés par un OU-Exclusif (+) avec les bits $b_7$, $b_{57}$, $b_{49}$, $b_{41}$, $b_{33}$ et $b_{25}$ du bloc de données D introduit. Ainsi, un masquage par combinaison de six bits $m_1$, $m_2$, $m_3$, $m_4$, $m_5$ et $m_6$ avec les bits $b_7$, $b_{57}$, $b_{49}$, $b_{41}$, $b_{33}$ et $b_{25}$ du message de donnée fournit un nouveau message qui, une fois appliqué en entrée de la cellule de chiffrement atteint le même résultat à l'issue de l'étape de la combinaison avec la sous-clé. Ainsi, l'attaquant qui calcule la corrélation entre les données traitées par l'algorithme lors du premier tour sous l'hypothèse correspondant à la bonne clé, n'obtient pas de corrélation, alors que sous l'hypothèse d'une fausse clé, il va voir apparaître une corrélation entre la clé prédite (son hypothèse) et les données effectivement calculées.

Pour que la manipulation des fausses données ne soit pas repérable, le masque (qui peut être considéré comme un bloc de données prédéterminé - les six bits de masquage aux positions $b_7$, $b_{57}$, $b_{49}$, $b_{41}$, $b_{33}$ et $b_{25}$) doit être introduit en entrée de la cellule.

Selon un mode de réalisation préféré, on choisit une combinaison quelconque d'états 0 et 1 pour les six bits $b_7$, $b_{57}$, $b_{49}$, $b_{41}$, $b_{33}$ et $b_{25}$ du bloc de données de masquage (une combinaison parmi les 64 possibles) et on fixe tous ses autres bits à l'état 0 (élément neutre de l'addition), de sorte que les bits du vrai message de donnée, autres que les bits $b_7$, $b_{57}$, $b_{49}$, $b_{41}$, $b_{33}$ et $b_{25}$, ne soient pas modifiés par le masque. En variante, les autres bits du bloc seront fixés aléatoirement. Cette variante n'est toutefois pas préférée car elle risque d'introduire un bruit blanc.

Le mode de réalisation préféré ci-dessus tient compte du fait que, dans l'algorithme DES, l'application de la première substitution S (SBOX) n'affecte que les bits $b_7$, $b_{57}$, $b_{49}$, $b_{41}$, $b_{33}$ et $b_{25}$, du bloc de données. En effet, en représentant les blocs de 64 bits sous la forme de matrices de huit mots de huit bits et en reprenant les notations précédentes, le bloc de données d'entrée peut s'écrire :

$b_1$, $b_2$, $b_3$, $b_4$, $b_5$, $b_6$, $b_7$, $b_8$ ;
$b_9$, $b_{10}$, $b_{11}$, $b_{12}$, $b_{13}$, $b_{14}$, $b_{15}$, $b_{16}$ ;
$b_{17}$, $b_{18}$, $b_{19}$, $b_{20}$, $b_{21}$, $b_{22}$, $b_{23}$, $b_{24}$ ;
$b_{25}$, $b_{26}$, $b_{27}$, $b_{28}$, $b_{29}$, $b_{30}$, $b_{31}$, $b_{32}$ ;
$b_{33}$, $b_{34}$, $b_{35}$, $b_{36}$, $b_{37}$, $b_{38}$, $b_{39}$, $b_{40}$;
$b_{41}$, $b_{42}$, $b_{43}$, $b_{44}$, $b_{45}$, $b_{46}$, $b_{47}$, $b_{48}$ ;
$b_{49}$, $b_{50}$, $b_{51}$, $b_{52}$, $b_{53}$, $b_{54}$, $b_{55}$, $b_{56}$ ;
$b_{57}$, $b_{58}$, $b_{59}$, $b_{60}$, $b_{61}$, $b_{62}$, $b_{63}$, $b_{64}$.

Après application de la permutation initiale IP, cette matrice devient :

$b_{58}, b_{50}, b_{42}, b_{34}, b_{26}, b_{18}, b_{10}, b_2$;
$b_{60}, b_{52}, b_{44}, b_{36}, b_{28}, b_{20}, b_{12}, b_4$ ;
$b_{62}, b_{54}, b_{46}, b_{38}, b_{30}, b_{22}, b_{14}, b_6$ ;
$b_{64}, b_{56}, b_{48}, b_{40}, b_{32}, b_{24}, b_{16}, b_8$ ;
$b_{57}, b_{49}, b_{41}, b_{33}, b_{25}, b_{17}, b_9, b_1$ ;
$b_{59}, b_{51}, b_{43}, b_{35}, b_{27}, b_{19}, b_{11}, b_3$ ;
$b_{61}, b_{53}, b_{45}, b_{37}, b_{29}, b_{21}, b_{13}, b_5$ ;
$b_{63}, b_{55}, b_{47}, b_{39}, b_{31}, b_{23}, b_{15}, b_7$.

Lorsque les parties gauche et droite sont soumises au premier tour, seule la partie droite :
$b_{57}, b_{49}, b_{41}, b_{33}, b_{25}, b_{17}, b_9, b_1$ ;
$b_{59}, b_{51}, b_{43}, b_{35}, b_{27}, b_{19}, b_{11}, b_3$;
$b_{61}, b_{53}, b_{45}, b_{37}, b_{29}, b_{21}, b_{13}, b_5$;
$b_{63}, b_{55}, b_{47}, b_{39}, b_{31}, b_{23}, b_{15}, b_7$,
est modifiée et devient :
$b_7, b_{57}, b_{49}, b_{41}, b_{33}, b_{25}, b_{17}$ ;
$b_{25}, b_{17}, b_9,...$;
...;
... , $b_{15}, b_7, b_{57}$.

En sortie de l'étape d'expansion E, on obtient huit mots de six bits chacun qui ont l'expression suivante :
$b_{32}, b_1, b_2, b_3, b_4, b_5$;
$b_4, b_5, b_6, b_7, b_8, b_9$;
$b_8, b_9, b_{10}, b_{11}, b_{12}, b_{13}$;
$b_{12}, b_{13}, b_{14}, b_{15}, b_{16}, b_{17}$ ;
$b_{16}, b_{17}, b_{18}, b_{19}, b_{20}, b_{21}$;
$b_{20}, b_{21}, b_{22}, b_{23}, b_{24}, b_{25}$;
$b_{24}, b_{25}, b_{26}, b_{27}, b_{28}, b_{29}$;
$b_{28}, b_{29}, b_{30}, b_{31}, b_{32}, b_1$.

Ainsi, on peut masquer une donnée D en la combinant par un OU-Exclusif avec un bloc dont au moins un des bits $b_7, b_{57}, b_{49}, b_{41}, b_{33}$ et $b_{25}$ est à 1 et tous les autres bits sont à 0. Toute combinaison de bits des bits $b_7, b_{57}, b_{49}, b_{41}, b_{33}$ et $b_{25}$ est valable pourvu qu'au moins un d'entre eux vaille un.

On masque successivement toutes les parties de la donnée D en appliquant le même masque à chaque bloc de 64 bits introduit dans la cellule.

Bien entendu, la présente invention est susceptible de diverses variantes et modifications qui apparaîtront à l'homme de l'art. En particulier, bien que l'invention ait été décrite en relation avec un mode de mise en oeuvre préféré de génération des fausses données, sa transposition à une autre fonction de génération est à la portée de l'homme du métier en respectant la condition que chaque portion sur laquelle s'applique la fonction de sélection de l'attaque DPA, c'est-à-dire chaque portion de six bits en entrée des étapes de substitution, diffère d'au moins un bit lorsqu'elle est masquée.

De plus, la réalisation pratique d'une cellule d'exécution algorithmique pour la mise en oeuvre de l'invention est à la portée de l'homme du métier à partir des indications fonctionnelles données ci-dessus en utilisant des outils de programmation classiques.

En outre, d'autres fonctions de combinaison des masques avec la donnée d'entrée sont envisageables pourvu de respecter les fonctionnalités décrites ci-dessus. L'addition bit à bit est toutefois préférée en raison de sa simplicité.

**Revendications**

1. Procédé de protection de l'exécution d'un calcul algorithmique prenant en compte au moins une donnée valide et au moins une clé secrète par un circuit intégré, et effectuant plusieurs itérations d'un calcul de chiffrement, le procédé consistant à exécuter l'algorithme avec la donnée valide entre plusieurs exécutions du même algorithme avec des données invalides, **caractérisé en ce que** les données invalides correspondent à une combinaison de la donnée valide avec des masques prédéterminés, et **en ce que** lesdits masques prédéterminés sont choisis de sorte que le résultat de l'application de l'algorithme avec la même clé soit différent pour au moins un bit du résultat de l'application de l'algorithme à la donnée valide.

2. Procédé selon la revendication 1, dans lequel la position de l'exécution avec la donnée valide parmi l'ensemble d'exécution est sélectionné aléatoirement.

**3.** Procédé selon la revendication 1, dans lequel ladite combinaison est, pour chaque exécution masquée, une addition bit à bit des bits d'un bloc de la donnée valide avec les bits des masques.

**4.** Procédé selon la revendication 1, dans lequel l'exécution avec la donnée valide correspond à une combinaison avec un masque neutre pour l'opération de combinaison.

**5.** Procédé selon la revendication 1, dans lequel l'algorithme est le DES, la combinaison intervenant avant l'exécution de la première itération.

**6.** Procédé selon la revendication 5, dans lequel les masques sont des blocs de 64 bits à combiner avec des blocs de 64 bits de la donnée valide avant application d'une itération de chiffrement, le bloc de 64 bits de chaque masque comprenant parmi les bits de positions $b_7$, $b_{57}$, $b_{49}$, $b_{41}$, $b_{33}$ et $b_{25}$, entre 1 et 6 bits à l'état 1, les bits de toutes les autres positions étant à l'état 0.

**7.** Processeur d'exécution d'un algorithme de chiffrement, comprenant des moyens adaptés pour mettre en oeuvre le procédé selon l'une quelconque des revendications 1 à 6.

**Claims**

**1.** A method for protecting the execution of an algorithmic calculation taking into account at least one valid piece of data and at least one secret key by an integrated circuit, and performing several iterations of an encryption calculation, consisting of executing the algorithm with the valid data between several executions of the same algorithm with invalid data, **characterized in that** the invalid data correspond to a combination of the valid data with predetermined masks, and **in that** said predetermined masks are selected so that the result of the application of the algorithm with the same key is different for at least one bit from the result of the application of the algorithm to the valid data.

**2.** The method of claim 1, wherein the position of the execution with the valid data in the general execution is randomly selected.

**3.** The method of claim 1, wherein said combination is, for each masked execution, a bit-to-bit addition of the bits of a block of the valid data with the mask bits.

**4.** The method of claim 1, wherein the execution with the valid data corresponds to a combination with a neutral mask for the combination operation.

**5.** The method of claim 1, wherein the algorithm is the DES algorithm, the combination taking place before execution of the first iteration.

**6.** The method of claim 5, wherein the masks are 64-bit blocks to be combined with the 64-bit blocks of the valid data before application of an encryption iteration, the 64-bit block of each mask comprising among the bits of positions $b_7$, $b_{57}$, $b_{49}$, $b_{41}$, $b_{33}$, and $b_{25}$, between 1 and 6 bits at state 1, the bits of all other positions being at state 0.

**7.** A processor of execution of an encryption algorithm, comprising means adapted for implementing the method of any of claims 1 to 6.

**Patentansprüche**

**1.** Ein Verfahren zum Schutz der Ausführung einer algorithmischen Berechnung, das mittels eines integrierten Schaltkreises wenigstens einen gültigen Teil von Daten und wenigstens einen geheimen Schlüssel berücksichtigt, und mehrere Iterationen einer Verschlüsselungsberechnung durchführt, bestehend aus dem Ausführen des Algorithmus mit den gültigen Daten zwischen dem mehrmaligen Ausführen desselben Algorithmus mit ungültigen Daten, **dadurch gekennzeichnet, dass** die ungültigen Daten einer Kombination der gültigen Daten mit vorbestimmten Masken entsprechen und dass die vorbestimmten Masken so gewählt sind, dass das Ergebnis der Anwendung des Algorithmus mit demselben Schlüssel in wenigstens einem Bit unterschiedlich ist zu dem Ergebnis der Anwendung des Algorithmus mit den gültigen Daten.

**2.** Das Verfahren nach Anspruch 1, wobei die Position der Ausführung des Algorithmus mit den gültigen Daten in der generellen Ausführung zufällig gewählt ist.

**3.** Das Verfahren nach Anspruch 1, wobei die Kombination für jede maskierte Ausführung eine Bit-für-Bit Addition der Bits eines Blocks von gültigen Daten mit den Maskenbits ist.

**4.** Das Verfahren nach Anspruch 1, wobei die Ausführung mit den gültigen Daten einer Kombination mit einer neutralen Maske für den Kombinationsvorgang entspricht.

**5.** Das Verfahren nach Anspruch 1, wobei der Algorithmus der DES-Algorithmus ist und die Kombination vor der Ausführung der ersten Iteration erfolgt.

**6.** Das Verfahren nach Anspruch 5, wobei die Masken 64-Bit Blöcke sind, die mit den 64-Bit Blöcken der gültigen Daten vor der Anwendung einer Verschlüsselungsiteration zu kombinieren sind, wobei die 64-Bit Blöcke jeder Maske unter den Bits der Positionen $b_7$, $b_{57}$, $b_{49}$, $b_{41}$, $b_{33}$ und $b_{25}$, zwischen 1 und 6 Bits im Zustand 1 aufweist und die Bits aller anderen Positionen im Zustand 0 sind.

**7.** Ein Prozessor zum Ausführen eines Verschlüsselungsalgorithmus, der Mittel aufweist, die geeignet sind das Verfahren nach Anspruch 1 bis 6 durchzuführen.

**EP 1 638 245 B2**

## RÉFÉRENCES CITÉES DANS LA DESCRIPTION

**Documents brevets cités dans la description**

- FR 2802668 A
- FR 2802669 A
- EP 1263163 A
- WO 0019367 A